# EUROPEAN PATENT SPECIFICATION

(11) **EP 2 983 994 B1**
(45) Date of publication and mention of the grant of the patent: **17.10.2018**
(21) Application number: 14782388.4
(22) Date of filing: 07.04.2014
(51) Int. Cl.: B65B 9/10, B65B 51/10

(54) **MULTIPLE SEALING BARS FOR FILM WRAPPING**
MEHRERE SIEGELBACKEN ZUM UMHÜLLEN MIT PLASTIKFOLIE
FERS SOUDEURS MULTIPLES POUR EMBALLAGE SOUS FILM

(30) Priority: 08.04.2013 US 201361809749 P
(43) Date of publication of application: 17.02.2016
(73) Proprietor: Cerf, Alain, Pinellas Park, FL 33782 (US)
(72) Inventor: Cerf, Alain, Pinellas Park, FL 33782 (US)
(74) Representative: Szabo, Zsolt
(86) International application number: PCT/US2014/033224
(87) International publication number: WO 2014/168887

(56) References cited:
- EP-A1- 1 442 984
- EP-A2- 1 157 930
- WO-A1-2007/135088
- DE-A1- 19 837 763
- JP-A- H07 172 415
- SU-A1- 509 497
- US-A- 2 764 862
- US-A- 5 518 490

## Description

### Field of the Invention

This invention is related to using multiple sealing bars on a film wrapping machine. The film wrapping machine can include a heat tunnel that shrinks the film around an article.

### Background of the Invention

The use of a single sealing bar on film wrapping machine is well known in the art. In order to seal and separate the articles in the tube, a section of the tube between the articles needs to collapse so that the sealing bar can pinch and seal the collapsed tube while the articles are moving on a conveyor. During the sealing process the section of the collapsed tube is separated thereby forming an article inside a tube that is sealed at each end. To collapse the tube a conveyor needs to be slowed to increase the slack in the tube. This reduces the productivity of the machine.

EP-1,442,984 A1 teaches a packaging machine that has a wrapping unit for forming a tubular wrapping from a continuous web of heat-seal material, and for feeding products successively into the tubular wrapping, wherein each product is located between two free tubular portions of the tubular wrapping, which are folded substantially onto the relative products, and are stabilized by means of at least two pairs of sealing devices advanced along endless relative paths independently. In particular, tubular wrapping and products are fed by said wrapping unit to an input station at a constant travelling speed V1, and products are fed by the sealing devices along the sealing path at a travelling speed V2 that varies along said sealing path.

EP-1,157,930 A2 discloses a sealing apparatus that includes a plurality of pairs of upper and lower sealing die assemblies which travel around upper and lower pairs of oval tracks. Each of the oval tracks incudes upper and lower horizontal portions and front and rear curved end portions. Each pair of die assemblies is driven independently of the other pairs. Each of the die assemblies includes a pair of carriages which are supported by the tracks and a sealing die which extends between the carriages. The sealing apparatus seals a series of products in a plastic film as the products and film are advanced along a horizontal path which extends between the upper tracks and between the lower tracks. A first pair of upper and lower sealing dies engage the film behind a first product and in front of a second product as the first dies move along the curved rear end portions of the tracks. The first dies push the film against the rear of the first product and seal and sever the film as the first dies move along the horizontal portion of the tracks. A second pair of dies engage the film behind the second product and repeat the sealing and severing operation.

### Brief description of the Drawing

Figures 1-3 show the usage of multiple sealing bars with retractable conveyors
Figures 4-6 show a detailed view of now the sealing bars and the retractable conveyors operate.

### Detailed description of the Invention.

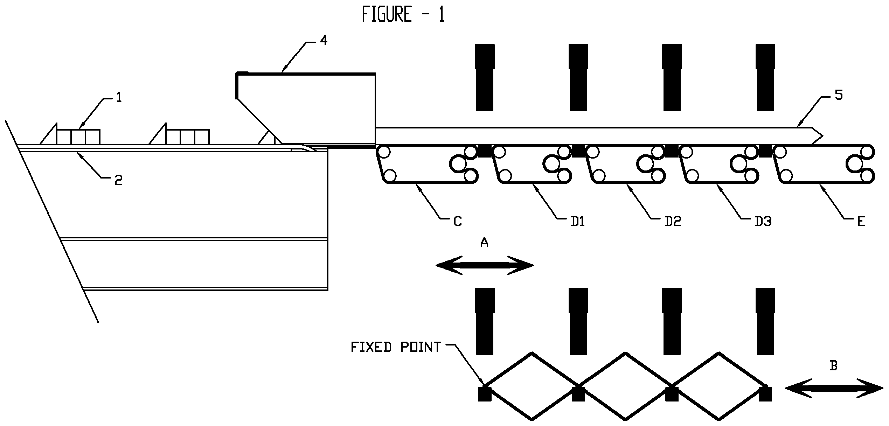

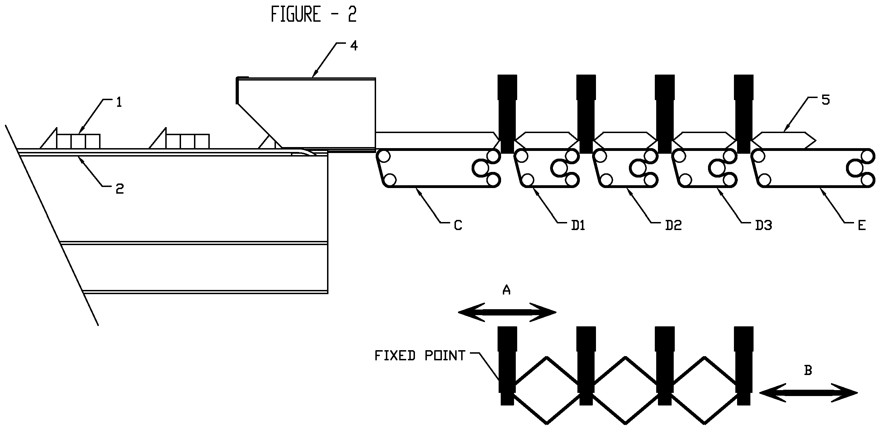

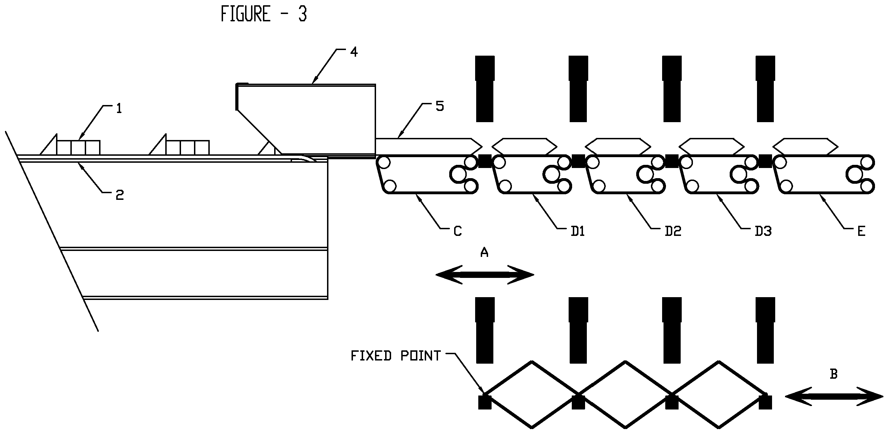

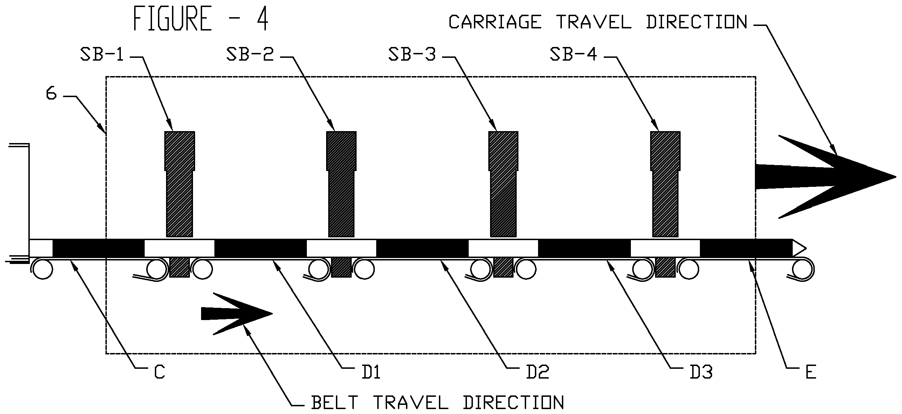

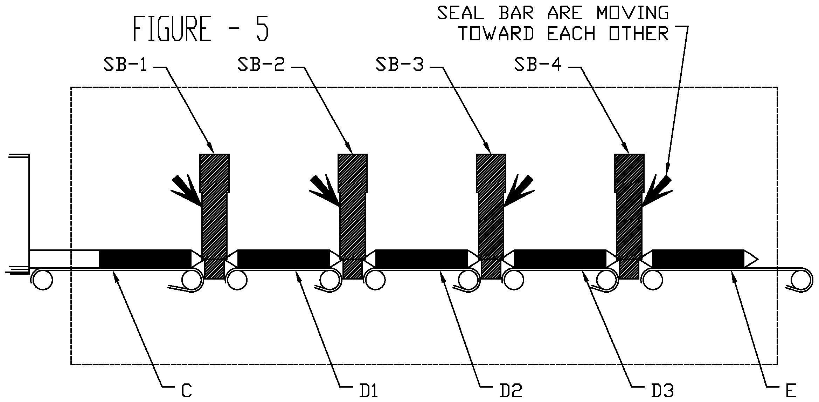

This invention addresses the need in the art for a faster machine. Faster productivity is accomplished by using multiple sealing bars. Multiple sealing bars have not been used in the prior art. Figures 1-3 show multiple sealing bars SB-1 to SB-4 and articles sealing and or bundles of articles 1 moving on a conveyor 2 inside a sleeve 4 that forms a continuous film tube 5. Figures 4, 5 and 6 show a detailed view of the movement of the sealing bars, retracting conveyors and the carriage as shown in figures 1 Figures and 2. Figure 4 shows a continuous motion machine where the products inside the film do not stop. The machine and product is moving at a continuous speed S. The sealing bars SB-1, SB-2, SB-3 and S-B4 and the conveyors D1, D2 and D3 between the sealing bars are mounted on a carriage 6. When the first product passes SB 4 shown as position E, the carriage starts moving at approximately or slightly less than the speed S. Figure 5 shows collapsing the film tube by decreasing the tension on the film tube by contracting the length of each conveyor D1, D2, and D3 between the sealing bars SB1 to SB4. The conveyors move at Figure 5 shows collapsing the film tube by decreasing the tension on the film tube by contracting a speed approximately or slight less than the speed of the machine and products. The contracted length of each conveyor is approximately the same. While the length of the conveyor is contracted the sealing bars follow the same motion staying about equal distance between the ends of the shorter conveyor. While the conveyors between the sealing bars are contracting, conveyors C and E are expanding to ensure that the gaps between conveyors C and D1 and D3 and E are at the desired spacing. The contraction of the conveyors is completed about the same time the sealing bars are closing on the film tube. When the sealing bars are closed, the conveyors maintain their contracted length.

Figure 5 shows sealing bars SB1 and SB2 following conveyor D1 in the machine direction. Like wise SB3 and SB4 follows the movement of conveyor D2 and D3 to position themselves equidistant between the shorter conveyors. When the sealing bars start to close and the conveyor lengths contract, conveyors conveyors C and E move from the position shown in Figure 4 to the position shown in figure 5. Likewise Conveyor E slows down when it moves in the closed position. During the entire process conveyor C moves at approximately same speed S or slightly less. Conveyor E will slow down when the sealing bars close and will accelerate when sealing bar SB4 opens. The sealing bar cuts the film tube and seals each end.

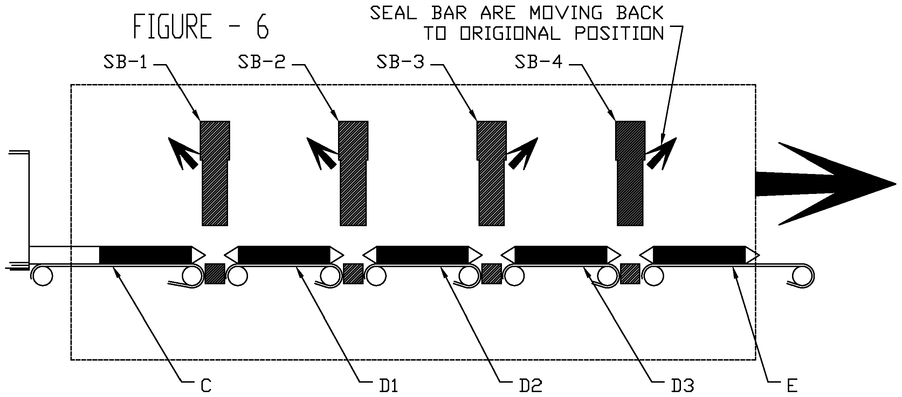

Figure 6 shows that after sealing, the carriage with the sealing bars and the retracted conveyors move back to their original position. The speed of the sealing bars has to be sufficient to ensure that they are located between the retracted conveyors.

## Claims

1. A process for using multiple sealing bars for sealing products in a film tube moving on a conveyor comprising:
placing articles (1) on a conveyor (2);
transporting the articles (1) into a film tube (5) at a predetermined speed;
providing a carriage (6), in an initial position, having multiple movable sealing bars (SB-1, SB-2, SB-3, SB-4) spaced in the direction of movement of the articles (1) and conveyors (D1, D2, D3) between the sealing bars (SB-1, SB-2, SB-3, SB-4) wherein the length of the conveyors (C, D1, D2, D3, E) can contract and expand;
sensing when an article (1) in the film tube (5) passes the sealing bar (SB-4) located furthest downstream;
moving the carriage (6) in machine direction at the predetermined speed in response to the sensing;
contracting the length of the conveyors (D1, D2, D3) between the sealing bars (SB-1, SB-2, SB-3, SB-4) to collapse the film tube (5) between the articles (1) while positioning the sealing bars (SB-1, SB-2, SB-3, SB-4) over the collapsed film tube (5) between the articles (1);
sealing the collapsed film; and
retracting the carriage (6) to its initial position while the sealing bars (SB-1, SB-2, SB-3, SB-4) and the conveyors (D1, D2, D3) between the sealing bars (SB-1, SB-2, SB-3, SB-4) return to their approximate starting position.

2. A process according to claim 1 wherein a retractable conveyor (E) located downstream of the last sealing bar (SB-4) slows down when the last sealing bar (SB-4) closes and accelerates when the last sealing bar (SB-4) opens.

3. A process according to claim 2 wherein there are four movable sealing bars (SB-1, SB-2, SB-3, SB-4).

4. An apparatus for using multiple sealing bars for sealing articles in a film tube comprising:
means for placing articles (1) on a conveyor (2);
the conveyor (2) for transporting the articles (1) into a film tube (5);
retractable conveyors (D1, D2, D3) for collapsing the film tube (5) between the articles (1);
multiple movable sealing bars (SB-1, SB-2, SB-3, SB-4) for sealing and cutting the collapsed film; and
a carriage (6) for carrying the movable sealing bars (SB-1, SB-2, SB-3, SB-4) spaced in the direction of the movement of the articles (1) and the retractable conveyors (D1, D2, D3) between the sealing bars (SB-1, SB-2, SB-3, SB-4) for moving the film tube (5).

5. An apparatus according to claim 4 wherein the sealing bars (SB-1, SB-2, SB-3, SB-4) are movable to a location between the retracted conveyors (D1, D2, D3) to cut and seal the tube film (5).

6. An apparatus according to claim 4 including a retractable conveyor (C) before the sealing bar (SB-1) located furthest upstream and a retractable conveyor (E) after the sealing bar (SB-4) located furthest downstream.

7. An apparatus according to claim 5 including means for moving the carriage (6) forward when an article (1) passes the sealing bar (SB-4) located furthest downstream.

8. An apparatus according to claim 7 including means for retracting the carriage (6) to its initial position after the tube film (5) has been cut and sealed.

## Patentansprüche

1. Verfahren zum Verwenden mehrerer Siegelschienen zum dichten Verschließen von Produkten in einem Folienschlauch, der sich auf einem Förderband bewegt, umfassend:
- Platzieren von Artikeln (1) auf einem Förderband (2);
- Transportieren der Artikel (1) in einen Folienschlauch (5) mit einer vorbestimmten Geschwindigkeit;
- Bereitstellen eines Wagens (6) in einer Ausgangsposition, der mehrere bewegbare Siegelschienen (SB-1, SB-2, SB-3, SB-4), die in der Bewegungsrichtung der Artikel (1) beabstandet angeordnet sind, und Förderbänder (D1, D2, D3) zwischen den Siegelschienen (SB-1, SB-2, SB-3, SB-4) aufweist, wobei die Länge der Förderbänder (C, D1, D2, D3, E) sich zusammenziehen und dehnen kann;
- Sensieren, wann ein Artikel (1) in dem Folienschlauch (5) die Siegelschiene (SB-4) passiert, die sich am weitesten nachgelagert befindet;
- Bewegen des Wagens (6) in einer Maschinenrichtung mit der vorbestimmten Geschwindigkeit ansprechend auf das Sensieren;
- Zusammenziehen der Länge der Förderbänder (D1, D2, D3) zwischen den Siegelschienen (SB-1, SB-2, SB-3, SB-4), um den Folienschlauch (5) zwischen den Artikeln (1) zusammenzuklappen, während eines Positionierens der Siegelschienen (SB-1, SB-2, SB-3, SB-4) über dem zusammengeklappten Folienschlauch (5) zwischen den Artikeln (1);
- Dichtes Verschließen der zusammengeklappten Folie; und
- Zurückziehen des Wagens (6) auf seine Ausgangsposition, während die Siegelschienen (SB-1, SB-2, SB-3, SB-4) und die Förderbänder (D1, D2, D3) zwischen den Siegelschienen (SB-1, SB-2, SB-3, SB-4) an ihre ungefähre Startposition zurückkehren.

2. Verfahren nach Anspruch 1, wobei ein zurückziehbares Förderband (E), das der letzten Siegelschiene (SB-4) nachgeordnet ist, sich verlangsamt, wenn sich die letzte Siegelschiene (SB-4) schließt, und beschleunigt, wenn sich die letzte Siegelschiene (SB-4) öffnet.

3. Verfahren nach Anspruch 2, wobei vier bewegbare Siegelschienen (SB-1, SB-2, SB-3, SB-4) vorhanden sind.

4. Vorrichtung zum Verwenden mehrerer Siegelschienen zum dichten Verschließen von Artikeln in einen Folienschlauch, umfassend:
- ein Mittel zum Platzieren von Artikeln (1) auf einem Förderband (2);
- das Förderband (2) zum Transportieren der Artikel (1) in einen Folienschlauch (5);
- zurückziehbare Förderbänder (D1, D2, D3) zum Zusammenklappen des Folienschlauchs (5) zwischen den Artikeln (1);
- mehrere bewegbare Siegelschienen (SB-1, SB-2, SB-3, SB-4) zum dichten Verschließen und Abschneiden der zusammengeklappten Folie; und
- einen Wagen (6) zum Tragen der bewegbaren Siegelschienen (SB-1, SB-2, SB-3, SB-4), die in der Bewegungsrichtung der Artikel (1) beabstandet angeordnet sind, und der zurückziehbaren Förderbänder (D1, D2, D3) zwischen den Siegelschienen (SB-1, SB-2, SB-3, SB-4) zum Bewegen des Folienschlauchs (5).

5. Vorrichtung nach Anspruch 4, wobei die Siegelschienen (SB-1, SB-2, SB-3, SB-4) an eine Stelle zwischen den zurückgezogenen Förderbändern (D1, D2, D3) bewegbar sind, um den Folienschlauch (5) abzuschneiden und dicht zu verschließen.

6. Vorrichtung nach Anspruch 4, die ein zurückziehbares Förderband (C) vor der am weitesten vorgelagert sich befindenden Siegelschiene (SB-1) und ein zurückziehbares Förderband (E) nach der sich am weitesten nachgelagert befindenden Siegelschiene (SB-4) einschließt.

7. Vorrichtung nach Anspruch 5, die ein Mittel zum Vorwärtsbewegen des Wagens (6), wenn ein Artikel (1) die sich am weitesten nachgelagert befindende Siegelschiene (SB-4) passiert, umfasst.

8. Vorrichtung nach Anspruch 7, die ein Mittel zum Zurückziehen des Wagens (6) auf seine Ausgangsposition, nachdem der Folienschlauch (5) abgeschnitten und dicht verschlossen worden ist, einschließt.

## Revendications

1. Procédé pour l'utilisation de barres de scellement multiples pour sceller des produits dans un tube de film se déplaçant sur un convoyeur comprenant :
le positionnement d'articles (1) sur un convoyeur (2) ;
le transport des articles (1) dans un tube de film (5) à une vitesse prédéterminée ;
la fourniture d'un chariot (6), dans une position initiale, ayant des barres de scellement mobiles multiples (SB-1, SB-2, SB-3, SB-4) espacées dans le sens de mouvement des articles (1) et des convoyeurs (D1, D2, D3) entre les barres de scellement (SB-1, SB-2, SB-3, SB-4) dans lequel la longueur des convoyeurs (C, D1, D2, D3, E) peut être contractée et étendue ;
la détection lorsqu'un article (1) dans le tube de film (5) passe au niveau de la barre de scellement (SB-4) située le plus loin en aval ;
le déplacement du chariot (6) dans un sens de machine à la vitesse prédéterminée en réponse à la détection ;
la contraction de la longueur des convoyeurs (D1, D2, D3) entre les barres de scellement (SB-1, SB-2, SB-3, SB-4) pour abaisser le tube de film (5) entre les articles (1) tout en positionnant les barres de scellement (SB-1, SB-2, SB-3, SB-4) sur le tube de film abaissé (5) entre les articles (1) ;
le scellement du film abaissé ; et
le retrait du chariot (6) à sa position initiale tandis que les barres de scellement (SB-1, SB-2, SB-3, SB-4) et les convoyeurs (D1, D2, D3) entre les barres de scellement (SB-1, SB-2, SB-3, SB-4) reviennent à leur position de départ approximative.

2. Procédé selon la revendication 1 dans lequel un convoyeur rétractable (E) situé en aval de la dernière barre de scellement (SB-4) ralentit lorsque la dernière barre de scellement (SB-4) se ferme et accélère lorsque la dernière barre de scellement (SB-4) s'ouvre.

3. Procédé selon la revendication 2 dans lequel il y a quatre barres de scellement mobiles (SB-1, SB-2, SB-3, SB-4).

4. Appareil pour l'utilisation de barres de scellements multiples pour sceller des articles dans un tube de film comprenant :
des moyens de placer des articles (1) sur un convoyeur (2) ;
le convoyeur (2) pour transporter les articles (1) dans un tube de film (5) ;
des convoyeurs rétractables (D1, D2, D3) pour abaisser le tube de film (5) entre les articles (1) ;
des barres de scellement mobiles multiples (SB-1, SB-2, SB-3, SB-4) pour sceller et couper le film abaissé ; et
un chariot (6) pour transporter les barres de scellement mobiles (SB-1, SB-2, SB-3, SB-4) espacées dans le sens de mouvement des articles (1) et les convoyeurs rétractables (D1, D2, D3) entre les barres de scellement (SB-1, SB-2, SB-3, SB-4) pour déplacer le tube de film (5).

5. Appareil selon la revendication 4 dans lequel les barres de scellement (SB-1, SB-2, SB-3, SB-4) sont mobiles jusqu'à une position entre les convoyeurs rétractés (D1, D2, D3) pour couper et sceller le film du tube (5).

6. Appareil selon la revendication 4 comprenant un convoyeur rétractable (C) avant la barre de scellement (SB-1) située le plus loin en amont et un convoyeur rétractable (E) après la barre de scellement (SB-4) située le plus loin en aval.

7. Appareil selon la revendication 5 comprenant des moyens de déplacer le chariot (6) vers l'avant lorsqu'un article (1) passe au niveau de la barre de scellement (SB-4) située le plus loin en aval.

8. Appareil selon la revendication 7 comprenant des moyens de rétracter le chariot (6) à sa position initiale après que le film du tube (5) a été coupé et scellé.
